# EUROPEAN PATENT SPECIFICATION

(11) **EP 4 544 146 B1**
(45) Date of publication and mention of the grant of the patent: **04.03.2026**
(21) Application number: 23745056.4
(22) Date of filing: 21.06.2023
(51) Int. Cl.: E21B 17/01, E21B 19/00, E21B 19/22, B63B 35/03, F16L 1/18, F16L 1/20

(54) **IMPROVING FATIGUE RESISTANCE OF STEEL CATENARY RISERS**
VERBESSERUNG DER ERMÜDUNGSBESTÄNDIGKEIT VON STAHLSEILSTEIGROHREN
AMÉLIORATION DE LA RÉSISTANCE À LA FATIGUE DE COLONNES MONTANTES DE CATÉNAIRES EN ACIER

(30) Priority: 22.06.2022 GB 202209181
(43) Date of publication of application: 30.04.2025
(73) Proprietor: Subsea 7 Do Brasil Serviços Ltda., 24050-090 Niterói - RJ (BR)
(72) Inventor: ASGARI, Peyman, 22280-030 Rio de Janeiro - RJ (BR); DE MORAES TAKAFUJI, Fernanda Cristina, São Paulo - SP (BR); RAMIRO AMORIM, Andre, 22795-165 Rio de Janeiro - RJ (BR); KARUNAKARAN, Daniel, 4056 Tananger (NO)
(74) Representative: Keltie LLP
(86) International application number: PCT/BR2023/050204
(87) International publication number: WO 2023/245267

(56) References cited:
- WO-A2-2011/028432
- AU-A1- 2019 262 192
- GB-A- 2 593 510
- NO-A1- 20 200 226
- US-A- 3 641 778
- TECHNOLOGY SUBSEA ET AL: "MASTER'S THESIS Study program/Specialization", 15 June 2019 (2019-06-15), XP093074129, Retrieved from the Internet <URL:https://uis.brage.unit.no/uis-xmlui/bitstream/handle/11250/2621173/Vesga_Jeison.pdf?sequence=1&isAllowed=y> [retrieved on 20230816]

## Description

This invention relates to subsea risers as used in the offshore oil and gas industry to convey hydrocarbons and sometimes other fluids and data from the seabed to the surface. Risers may also be used reciprocally to convey other fluids, power and data from the surface to the seabed. The invention is particularly concerned with catenary risers of rigid steel pipe that are apt to be installed by the reel-lay method.

Various riser configurations are known, including those known in the art as free-hanging, steep, lazy wave and weight-distributed risers. The riser is typically suspended between a floating upper support and the seabed, the support being a surface facility such as a platform or an FPSO (floating production, storage and offloading) vessel.

A riser moves in multiple directions on various timescales and frequencies throughout its operational life. Motion of the riser is driven by multiple inputs, notably: motion of the floating upper support expressed as heave, pitch, roll and yaw; seawater motion caused by currents, tides and waves, including flows that promote vortex-induced vibration (VIV); and pipeline motion across the seabed, known in the art as walking. Repetitive or oscillatory motion generates fatigue in a riser that may, over time, cause its failure and rupture.

A common free-hanging riser comprises a rigid pipe that hangs freely as a catenary from a floating upper support. Most conventionally, such a riser is of steel, hence being known in the art as a steel catenary riser or SCR. SCRs have been used around the world for more than fifty years to transport oil and gas between the seabed and surface facilities. The SCR is a field-proven solution that offers lower CAPEX and OPEX than other riser options.

Those skilled in the art know that nominally rigid pipes are not devoid of flexibility. Indeed, SCRs exploit the bending behaviour of rigid pipes in the elastic domain. However, whilst they have flexibility, 'rigid' pipes do not fall within the definition of 'flexible' pipes as understood in the art.

Conventional rigid pipes used in the subsea oil and gas industry are specified in the American Petroleum Institute (API) Specification 5L and Recommended Practice 1111. A rigid pipe usually consists of, or comprises, at least one pipe of solid steel or steel alloy. However, additional layers of other materials can be added, such as an internal liner layer or an outer coating layer. A rigid pipe may also have a concentric pipe-in-pipe (PiP) structure. Rigid pipe joints are terminated by a bevel, a thread or a flange, and are assembled end-to-end by welding, screwing or bolting them together to form a pipe string or pipeline.

The allowable in-service deflection of rigid pipe is determined by the elastic limit of steel, which is around 1% bending strain. Exceeding this limit caused plastic deformation of the steel. It follows that the minimum bend radius or MBR of rigid pipe used in the subsea oil and gas industry is typically around 100 to 300 metres. However, slight plastic deformation can be recovered or rectified by mechanical means, such as straightening. Thus, during reel-lay installation of a rigid pipeline made up of welded rigid pipes, the rigid pipeline can be spooled on a reel with a typical radius of between 8 and 10 metres. This implies a bending strain above 2% for conventional diameters of rigid pipes, requiring the pipe to be straightened mechanically during unreeling.

Conversely, flexible pipes used in the subsea oil and gas industry are specified in API Specification 17J and Recommended Practice 17B. The pipe body is composed of a composite structure of layered materials, in which each layer has its own function. In particular, bonded flexible pipes comprise bonded-together layers of steel, fabric and elastomer and are manufactured in short lengths in the order of tens of metres. Typically, polymer tubes and wraps ensure fluid-tightness and thermal insulation, whereas steel layers or elements provide mechanical strength.

The structure of a flexible pipe allows a large bending deflection without a significant increase in bending stresses. For example, the MBR of flexible pipe used in the subsea oil and gas industry is typically between 3 and 6 metres. The bending limit of the composite structure is determined by the elastic limit of the outermost plastics layer of the structure, typically the outer sheath, which limit is typically 6% to 7% bending strain. Exceeding that limit causes irreversible damage to the structure.

A simple free-hanging rigid riser such as an SCR has advantages of low cost, a short catenary length and ease of installation. For example, such risers may be installed by conventional pipelaying vessels using well-proven installation techniques such as S-lay, J-lay or reel-lay. However, the tension load at the top of a simple catenary riser increases with depth due to the weight of the riser that is suspended in the water column between the surface and the seabed. Also, a free-hanging rigid riser is particularly susceptible to fatigue-inducing motion being transmitted directly from a floating upper support toward the touch-down point or TDP. There, the riser extends around a sagbend being an upwardly-concave section with increased curvature disposed between the main upper section of the riser and the TDP.

Vessel motion is the primary driver of fatigue-inducing motion in a riser that is freely suspended from a vessel. In dynamic environments that suffer from high sea states, a floating upper support such as an FPSO imparts a large repetitive vertical motion that is transmitted along the riser toward the TDP and so can compromise the integrity of the riser. For example, wave-driven movement of an FPSO may cause dynamic compression-wave pulses to travel downwardly along an attached free-hanging riser, rather like a wave travelling along a whip. Such pulses travel from the top joint connection, where the riser is connected to the FPSO, and down the riser to the TDP. At the TDP, the seabed can reflect the pulses back up the riser in reaction, thereby creating secondary compression waves that can amplify the primary compression waves by constructive interference. If the resulting transient compressive loads reach a critical limit, the structure of the riser can buckle, rupture and collapse.

Thus, a conventional SCR may not be appropriate for use in some environments. This creates a problem because more complex riser systems that meet all technical challenges are much more expensive, especially if they cannot be installed using techniques for which appropriate installation vessels are widely available. Consequently, available riser solutions are not viable for some projects or at least can lead to a substantial increase in the field development cost. For example, one way to address the problem of fatigue would be to use a fully flexible riser made of unbonded flexible pipe. Whilst unbonded flexible pipe can be manufactured in lengths of hundreds of metres, it is very expensive, has limited resistance to pressure and temperature and is of limited diameter and hence flow capacity. It therefore remains strongly preferable to make a riser from rigid steel pipe where possible.

Various approaches can be used to minimise fatigue of an SCR, such as: changing the type of steel alloy (for example using X80 steel, being an API classification of high-strength steel); increasing the thickness of steel along part or all of the length of the riser; anchoring the touch-down point; or decoupling motion between the surface and the SCR.

The most common approach to controlling fatigue is to decouple at least a portion of a riser from the motion of a floating upper support. For example, degrees of freedom may be allowed at the connection between the riser and the support. This approach is used in hybrid risers that effect a flexible connection to the support through a flexible pipe or jumper pipe. However, hybrid risers require a large amount of buoyancy to support the weight of the riser because that weight load is not supported by the surface facility. Sub-surface buoyancy tanks are commonly used but are expensive to make and difficult to handle and to install because of their weight and size. The flexible pipe is also a critical part and is much more expensive than an equivalent length of steel pipe.

BR PI0602675 teaches the addition of a pliant section at a specific location along an SCR. Similarly, the applicant's gimbal joint riser disclosed in WO 2019/051576 proposes another solution to decouple motion of upper and lower sections of a riser. However, both of these solutions require complex bespoke structures to ensure continuity of the riser and mechanical strength and flexibility.

In WO 2006/073887, weights or buoys are added at relevant locations along a riser to modify the dynamic response of the riser to force inputs. BR PI0804577 discloses a combination of anchoring and dynamic decoupling in which a flexible section is present between the floating upper support and a subsurface buoy. In WO 2011/028432, ballast is distributed along the riser. In some cases, typically as disclosed by WO 2008/036728, weights, buoys and anchors are combined to create a lazy wave configuration comprising one or more extra bend sections.

In WO 2011/041860, one or more sections of an SCR are surrounded with hydrodynamic dampers to hinder propagation of compression waves along the riser. The or each damper section is initially nominally straight or follows the general smooth catenary curvature of the SCR as a whole. When a compression wave propagates, the damper section is deformed into a loop to absorb the compression wave. In other words, the damper section is preferentially deflected laterally at the loop to adopt a smaller radius of curvature than the adjoining undamped sections of the riser.

GB 2593510 describes a residual curvature method applied to a portion of pipeline to mitigate pipeline buckling.

NO 20200226 relates to a subsea pipeline. During laying, curvature is imparted to the pipeline along its length, for example by the residual curvature method.

AU 2019262192 relates to apparatus and methods for introducing residual curvature to sections of pipeline during S-lay, where the residual curvature is introduced on a lay barge before the selected section reaches the stinger.

The Master's Thesis titled "Feasibility Study of Application of Residual Curvature Method in Deepwater Free Hanging Risers", dated 15 June 2019 and submitted for the Offshore Technology / Marine and Subsea Technology study program at the University of Stavanger by Jeison Leandro Vesga Hernández, describes a residual curvature method applied to steel catenary risers.

The scope of the invention is set out in independent claims 1, 10 with alternative embodiments as set out in the dependent claims.

Against this background, the invention resides in a method of installing a steel catenary riser, the method comprising: progressively unspooling and launching the riser into water from a reel-lay vessel; plastically deforming the riser in a straightening process aboard the vessel downstream of unspooling and upstream of launching the riser; and adjusting the straightening process to form a series of two or more residual curvature loops of locally increased curvature in a length of the riser that will be suspended in the water above a touch-down point in use, successive loops of the series being separated and joined by a straighter portion of the riser of lesser curvature than those loops.

The straightening process may also be adjusted to form upper and lower straighter portions of the riser respectively above and below the series of loops, those straighter portions also being of lesser curvature than the loops of the series. The straightening process may substantially fully straighten the or each straighter portion of the riser. Nevertheless, in the installed riser, the or each straighter portion of the riser may substantially follow a catenary curve that extends to a touch-down point of the riser.

In the installed riser, successive loops of the series are downwardly convex. Vertical clearance between the bottom of the series of loops and the seabed may be less than 5% of the water depth in the installed riser.

One or more buoyancy elements may be attached to the riser above at least one of the loops of the series, for example between successive loops of the series, or above the series of loops. The or each buoyancy element may be attached to a point on the riser at any stage after that point undergoes the straightening process, for example before that point is launched into the water.

Conversely, one or more ballast weights may also be attached to the riser, for example to at least one of the loops of the series. Similarly, one or more chains may be suspended from at least one of the loops of the series.

Correspondingly, the inventive concept may also be expressed as a steel catenary riser comprising a series of pre-formed portions that are plastically formed to different extents in longitudinal succession along a length of the riser that is suspended in water above a touch-down point. Those portions comprise two or more residual curvature loops of locally increased curvature, successive loops of the series being separated and joined by a straighter portion of the riser of lesser curvature than those loops. Successive loops of the series are downwardly convex.

The inventive concept also embraces a subsea installation comprising at least one riser of the invention.

Thus, the invention contemplates a subsea riser comprising a rigid riser pipe that is suspended from a surface support as a catenary extending from the surface support through a sagbend to a seabed touch-down point. The catenary shape of the riser extending between the surface and the seabed is interrupted by deflected sections or loops of locally greater curvature than the adjoining sections of the riser above and below them. The loops depart laterally from the underlying catenary curvature to add axial flexibility to the riser and hence to maximise its fatigue life by absorbing and damping compression and tension motions.

In the invention, the loops are pre-formed in the riser by controlling the shape of the pipe wall of the riser itself during straightening, hence changing the curvature with which the pipe is bent along its length. Thus, the locally deflected discontinuous shape of the riser is intrinsic to the main pipe of the riser itself rather than being imparted to that pipe by means of other structures or attachments only after straightening. This is distinguished from the prior art in which deflected sections of a riser pipe are defined by forces applied locally to the pipe underwater, after straightening, by external influences or attachments such as ballast, buoyancy, anchors, moorings or hydrodynamic dampers.

To impart this intrinsic shape to a riser pipe, the invention employs principles of the 'residual curvature method' (RCM) when installing the riser by a reel-lay method. The RCM, based on the teachings of EP 1358420 and further exploited in WO 2013/126251, was developed as a buckle control technique to create thermal expansion loops in reel-laid subsea pipelines or flowlines. The purpose of the thermal expansion loops is to reduce the longitudinal stiffness of selected portions of the pipeline corresponding to the loops, compared to the longitudinal stiffness of straighter portions of the pipeline disposed between the loops. This ensures that thermal elongation of the pipeline as a whole will occur in a distributed and controlled manner, causing the loops to deflect laterally without generating excessive compressive forces in the pipe wall.

The RCM exploits the conventional straightener system of a reel-lay installation vessel aboard which a pipeline is spooled and transported in a plastically-deformed state as noted above. The pipeline passes through the straightener system, which generally comprises rollers, after being unspooled from a reel or carousel of the vessel. The action of the rollers reverses the plastic deformation that was imparted to the pipeline upon spooling.

In accordance with the RCM, the radius of curvature of the pipeline is modified locally by changing the straightening force that is applied to the pipeline. Typically, the pipeline is under-straightened locally at longitudinal intervals as the pipeline is launched into the sea. Thus, bending stress remains present in some sections of the pipeline. This forms a series of laterally-extending thermal expansion loops of locally increased curvature - that is, with a locally reduced radius of curvature - that are distributed longitudinally along the pipeline between straighter portions of lesser curvature.

The invention arises from the insight that residual curvature, preferably two or more loops of residual curvature, can drastically improve the dynamic response of the riser and therefore greatly reduce fatigue. The residual curvature loop or loops may optionally be combined with known ancillary equipment such as buoys and weights, with the beneficial effect varying depending on the location of such ancillary equipment. Calculations show that the best trade-off against fatigue without buoys is to incorporate three loops. With a few extra buoys, two loops are enough but one loop may be insufficient.

Embodiments of the invention implement a method to install an SCR by the reel-lay method to provide the SCR with improved resistance to fatigue. The method comprises: starting to lay the riser by unspooling a pipeline from a reel; and generating at least two residual curvature loops in the section of the pipeline that will remain permanently above the seabed in the riser, the or each adjacent pair of those loops being separated by a section of the pipeline that is straightened or straightened to a greater extent than the loops. The method may also comprise adding at least one buoy or a set of distributed buoys between, or directly above, the residual curvature loops.

The invention proposes a rigid riser solution that enables a free hanging riser configuration to be suspended, or hung off, in deep or ultradeep water from a surface floater that will experience large vertical motions during its operational life. The riser solution requires few modifications and little, if any, extra equipment. The riser of the invention is a free-hanging catenary of steel pipe divided into two sections, or upper and lower risers, by introducing two or more pre-bent segments or loops of the same steel material into a region of the riser close to, but not touching, the seabed. The pre-bent loops are formed by the RCM. As noted above, the RCM is a proven technology that is already in use to install flowlines that lie on the seabed. Use of the RCM need not increase the time required to install a riser once the straightener of the installation vessel has been calibrated appropriately.

The invention provides various benefits, enabling a free-hanging riser configuration to be used in deep-water production systems located in harsh environments by reducing dynamic loads around the TDP and, in particular, drastically reducing or avoiding compressive waves reaching the TDP. The invention provides these benefits at a lower cost than available alternative solutions such as steel lazy wave risers (SLWRs). In particular, buoyancy modules cost money, and their installation takes time and costs money too. SLWRs therefore suffer from the cost and logistics involved in procuring, handling and installing the numerous buoyancy modules they require, and the consequential operational risk of dealing with so many lifts and assembly operations aboard the installation vessel.

Nevertheless, the invention may employ a relatively small number of buoyancy modules positioned on the riser above one or more of the residual curvature loops, which improves performance in some cases. A pipe end fitting or additional coating thickness may also be applied to the pipeline around the TDP to improve fatigue life.

RCM has been proposed for the installation of SCRs on a theoretical, academic basis. Specifically, *https:*//*pantheon.ufrj.br*/*bitstream*/*11422*/*12728*/*1*/*AndreRamiroAmorim-min.pdf* is a link to a Masters Degree dissertation entitled *Study of the Residual Curvature Applied to a Rigid Riser Under Dynamic Compression in Free Hanging Configuration.* The dissertation was presented in 2018 by one of the inventors of the present invention to COPPE, the engineering institute of the Federal University of Rio de Janeiro. It proposes inserting one loop of residual curvature into an SCR. Whilst some of the drawings in the dissertation suggest the presence of multiple loops, those loops alternate in opposite lateral directions in the manner of a sinusoidal wave rather than extending in the same lateral direction separated by fully straightened sections of lesser curvature.

In summary, a method of installing a steel catenary riser in accordance with the invention comprises progressively unspooling and launching the riser from a reel-lay vessel. The riser is plastically deformed in a straightening process aboard the vessel downstream of unspooling and upstream of launching the riser. The straightening process is adjusted to form a series of two or more residual curvature loops of locally increased curvature in a length of the riser suspended above a touch-down point. Successive loops of the series are separated and joined by a straighter portion of the riser of lesser curvature than those loops. Buoyancy elements are attached to at least one straighter portion of the riser above at least one of the loops of the series, or between successive loops of the series, or above the series of loops.

In order that the invention may be more readily understood, reference will now be made, by way of example, to the accompanying drawings in which:
Figure 1 is a schematic plan view of a steel catenary riser of the invention being reel-laid from a pipelay vessel that employs an RCM technique to impart locally increased curvature to portions of the riser spaced at longitudinal intervals;
Figure 2 is a schematic side view corresponding to Figure 1;
Figure 3 is a schematic side view corresponding to Figure 2 but showing a variant in which a crane of the vessel is adding buoyancy modules to the riser;
Figure 4 is a schematic side view of various risers of the invention with buoyancy modules disposed between residual curvature loops of a series;
Figure 5 is a schematic side view of various risers of the invention with buoyancy modules disposed above a series of residual curvature loops;
Figure 6 is a schematic side view of various risers of the invention shown in conjunction with a conventional SCR;
Figure 7 is a chart of load and resistance factor design (LRFD) values for the various risers shown in Figure 6, the risers in each case having a thermal insulation coating or a 3LPP coating;
Figures 8a and 8b are charts showing, respectively, LRFD values and compressive forces for risers with one, two and three residual curvature loops subject to a net buoyancy force of from six to twelve tonnes, the risers in each case having a thermal insulation coating;
Figures 9a and 9b correspond to Figures 8a and 8b but represent risers that have a 3LPP coating;
Figures 10a and 10b are charts showing, respectively, LRFD values and compressive forces for risers with two, three and four residual curvature loops subject to a net buoyancy force of from one to fourteen tonnes, the risers in each case having a thermal insulation coating;
Figures 11a and 11b correspond to Figures 10a and 10b but represent risers that have a 3LPP coating and are subject to a net buoyancy force of from one to sixteen tonnes;
Figures 12a and 12b are charts showing, respectively, LRFD values and compressive forces for a conventional SCR, a riser with a series of residual curvature loops, a riser with buoyancy modules and a riser with a combination of buoyancy modules and a series of residual curvature loops, in each case with a thermal insulation coating or a 3LPP coating;
Figure 13 is a side view of a riser having two residual curvature loops and a touch-down portion that extends across the touch-down point;
Figure 14 is a perspective view of an upset-end pipe that may be incorporated in the touch-down portion of Figure 13;and
Figure 15 is a side view of a riser having three residual curvature loops and a touch-down portion comprising a coating or layer applied to the outer surface of the riser.

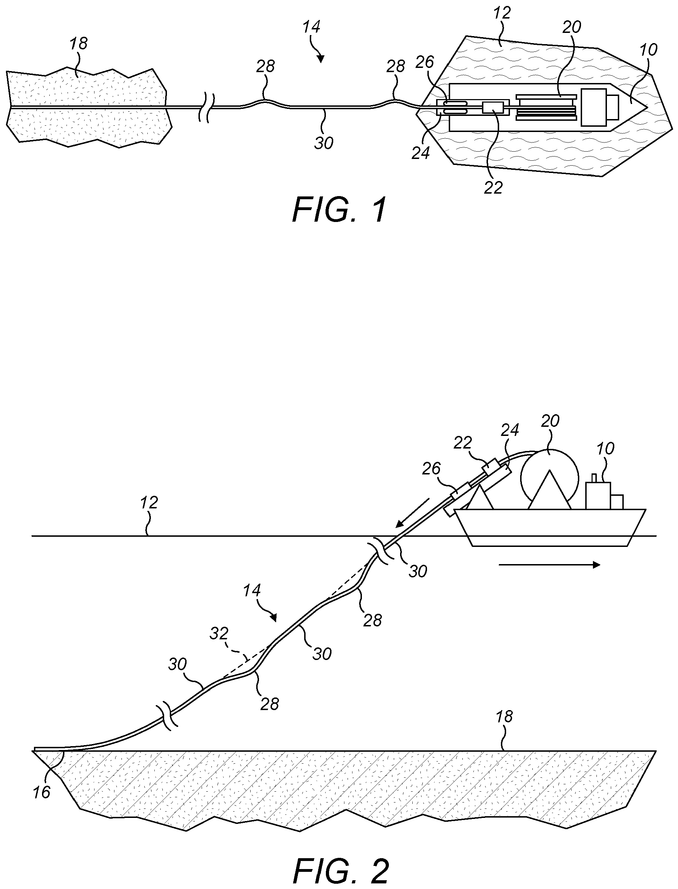

Referring firstly to Figures 1 and 2 of the drawings, which are not to scale, a conventional reel-lay vessel 10 is shown here advancing across the surface 12 of the sea while installing a steel catenary riser 14 extending from the surface 14 to a touchdown point (TDP) 16 on the seabed 18. The riser 14 is nominally rigid, having been fabricated onshore from lengths of steel pipe. However, the riser 14 has sufficient flexibility to bend along its length. This bending deformation remains in the elastic domain provided that an appropriate minimum bending radius (MBR) is observed.

By way of example, the riser 14 may have an inner diameter of eight inches (203.2mm), a wall thickness of one inch (25.4mm) and a top angle of 10° at the floating upper support when fully installed. The riser 14 is apt to be installed in deep to ultradeep water, for example in a water depth of 2100m.

The riser 14 may have a thick coating of thermally insulating material, for example with a thickness of 75mm, or a thinner anti-corrosion coating such as three-layer polypropylene (3LPP) of, typically, 3mm in thickness.

The vessel 10 carries a reel 20, in this example turning about a horizontal axis, onto which the riser 14 is spooled during or after fabrication for transport to the installation site. The bending deformation involved in spooling the riser 14 onto the reel 20 exceeds the MBR and hence the elastic limit, thus imparting plastic deformation to the pipe wall of the riser 14. Consequently, after being unspooled from the reel 20 and before being launched into the sea, the riser 14 is guided through a straightener system 22 that imparts a suitable degree of reverse plastic deformation to the pipe wall.

The straightener system 22 is mounted on an inclined laying ramp 24 that extends over the stern of the vessel 10. The laying ramp 24 also comprises a hold-back system 26 that typically comprises tensioners and clamps for supporting the weight of the riser 14 suspended as a catenary between the vessel 10 and the seabed 18.

In the invention, the straightener system 22 is controlled in accordance with the residual curvature method (RCM), periodically to reduce the straightening force that imparts reverse plastic deformation to the riser 14. As a result, the riser 14 is under-straightened locally at longitudinal intervals while being launched into the sea. This creates a series of loops 28 in accordance with the principles set out in EP 1358420 as noted above.

The loops 28 are portions of the riser 14 whose curvature is increased locally relative to adjoining straighter portions 30 of substantially lesser curvature. In other words, the loops 28 have a substantially smaller radius of curvature than that of the straighter portions 30. Consequently, the straighter portions 30 have a substantially greater radius of curvature than that of the loops 28. Indeed, the radius of curvature of a straighter portion 30 may approach infinity to the extent that the portion 30 is substantially straight.

The straighter portions 30 of the riser 14 extend between the loops 28 as intervening intermediate portions that extend continuously from one loop 28 to the next loop 28. The straighter portions 30 of the riser 14 also include upper and lower portions of the riser 14 that extend respectively above and below the series of loops 28. Thus, the loops 28 alternate with the straighter portions 30 along the length of the riser 14. Transition sections effect a smooth transition of curvature between the straighter portions 30 and the loops 28 that adjoin them.

The loops 28 aside, the riser 14 follows an underlying conventional catenary path 32 that curves smoothly with progressively increasing curvature approaching the TDP 16. The straighter portions 30 of the riser 14 lie substantially on that underlying path 32 whereas the loops 28 depart laterally or downwardly from the underlying path 32.

The series of loops 28 is very close to the seabed 18 relative to the length of the riser 14. For example, the vertical clearance between the seabed 18 and the bottom of the series of loops 28 may be less than about 5%, for example 2.75%, of the water depth. Thus, in a water depth of 2100m, the bottom of the series of loops 28 may be only about 58m above the seabed 18.

In view of the path of the riser 14 from the reel 20, over the laying ramp 24 and through the straightener system 22, the loops 28 are typically upwardly convex in a vertical plane before being launched into the sea. As the riser 14 is lowered toward the seabed 18 and twists about its central longitudinal axis, the loops 28 tilt from their initial orientation to become downwardly convex eventually, hence hanging beneath the underlying catenary path 32 of the riser 14. The loops 28 may then lie in a vertical plane or at an acute angle to either side of the vertical plane.

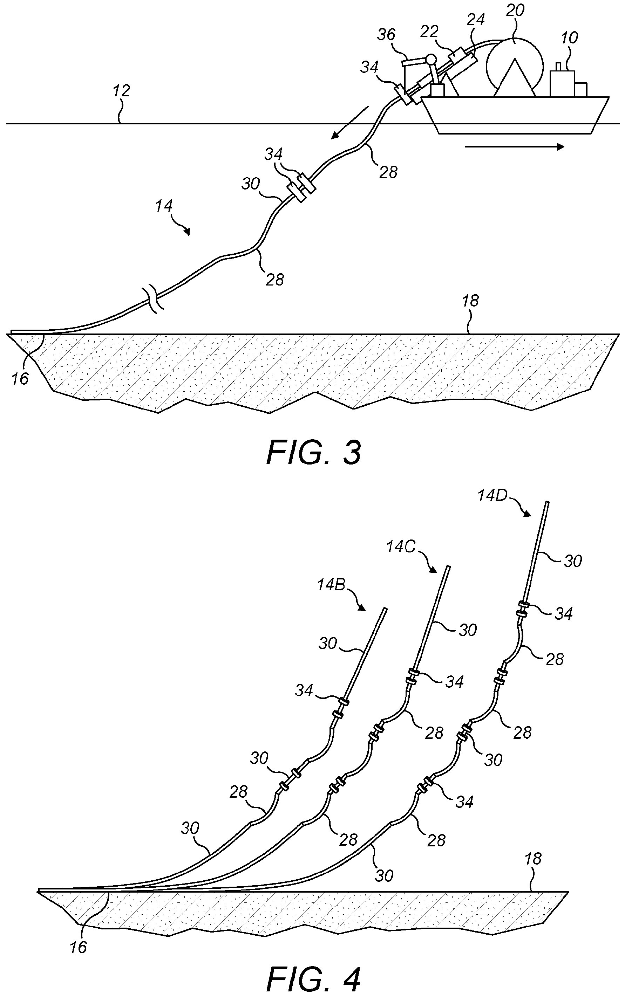

Figure 3 corresponds to Figure 2 but shows buoyancy elements in the form of buoyancy modules 34 being lifted by a crane 36 of the vessel 10 and fixed to the riser 14 before being launched with the riser 14 into the water. The buoyancy modules 34 are fixed to the riser 14 at any suitable location downstream of the straightener system 22, for example downstream of the hold-back system 26 on the laying ramp 24 or otherwise above where the riser 14 enters the water.

In this example, one or more buoyancy modules 34 are disposed on the straighter portions 30 of the riser 14 between the loops 28 of the series. In other examples, one or more buoyancy modules 34 are disposed on the straighter upper portion 30 of the riser 14 above a single loop 28 or a series of loops 28, instead of or additional to any buoyancy modules 34 between the loops 28 of the series. Any suitable number of buoyancy modules 34 may be used on the riser 14, from one upwards, but significantly fewer buoyancy modules 34 will be required than in SLWRs of the prior art.

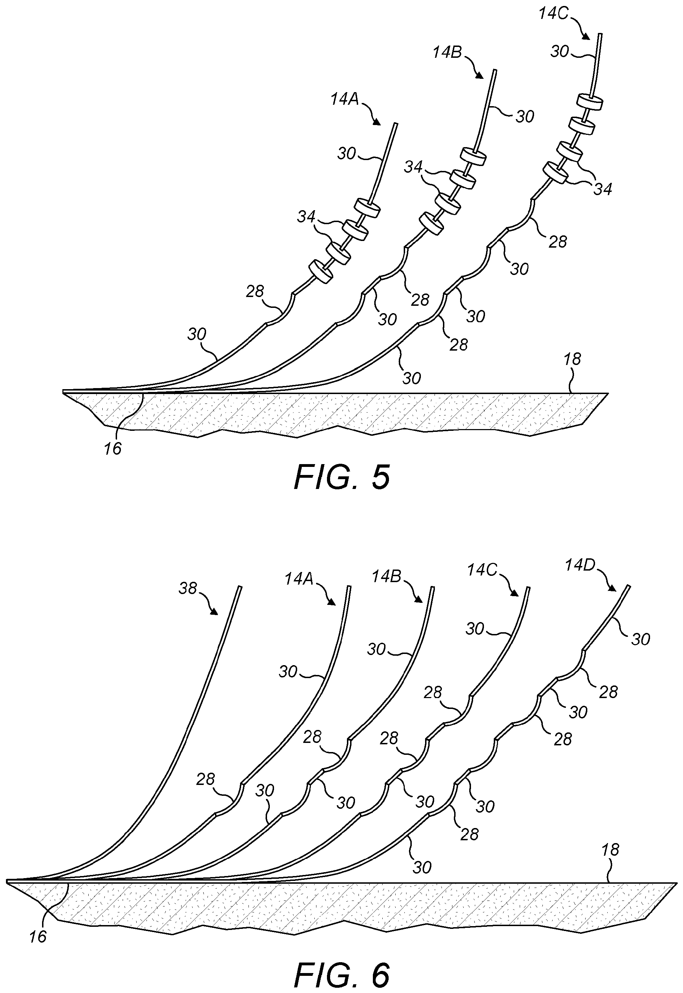

In this respect, Figures 4 and 5 show variants of the riser 14 with different numbers of residual curvature loops 28, namely riser 14A with a single loop 28, riser 14B with a series of two loops 28, riser 14C with a series of three loops 28 and riser 14D with a series of four loops 28. In each of risers 14B, 14C and 14D, the loops 28 of the series alternate with straighter portions 30 of the riser 14.

In Figure 4, which shows risers 14B, 14C and 14D, one or more buoyancy modules 34 are disposed on the straighter portions 30 between the loops 28 of the series and one or more buoyancy modules 34 are disposed on the straighter upper portion 30 of the riser 14 above the series of loops 28. In other words, each loop 28 has at least one buoyancy module 34 on the straighter portion 30 of the riser 14 immediately above it. In this example, a pair of buoyancy modules 34 is provided directly above each loop 28.

Conversely in Figure 5, which shows risers 14A, 14B and 14C, no buoyancy modules 34 are disposed between the loops 28 but again, one or more buoyancy modules 34 are disposed on the straighter upper portion 30 of the riser 14 above the loop 28 or the series of loops 28. In this example, a set of multiple buoyancy modules 34 is provided on each riser 14A, 14B and 14C.

Figure 6 also shows the riser variants 14A to 14D, in this case without buoyancy modules 34, in addition to a conventional SCR 38 that is devoid of residual curvature loops 28.

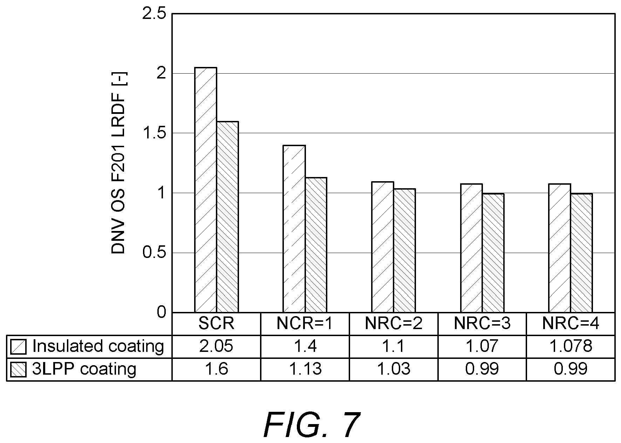

Figure 7 shows the beneficial effect of the residual curvature loops 28 on load and resistance factor design (LRFD) values for the various risers 14A to 14D shown in Figure 6, relative to the conventional SCR 38 also shown in Figure 6. LRFD is a design approach based upon a limit state and partial safety factor methodology and is used in the DNV standard relevant to riser systems, namely DNV-ST-F201. The number of residual curvature loops 28 is represented in Figure 7 as 'NRC=1' for riser 14A, 'NRC=2' for riser 14B and so on. In each case, separate LRFD values are shown for the SCR 38 and the risers 14A to 14D with a thermal insulation coating or with a 3LPP coating.

It will be apparent from Figure 7 that LRFD values for the risers 14A to 14D are beneficially lowered in comparison to the SCR 38 and that the benefit is especially clear for risers 14B, 14C and 14D with two, three and four loops 28, hence NRC=2, NRC=3 and NRC=4. For those risers 14B, 14C and 14D, the LRFD values are close to 1 or in the case of risers 14C and 14D (NRC=3 and NRC=4) with a 3LPP coating, below 1.

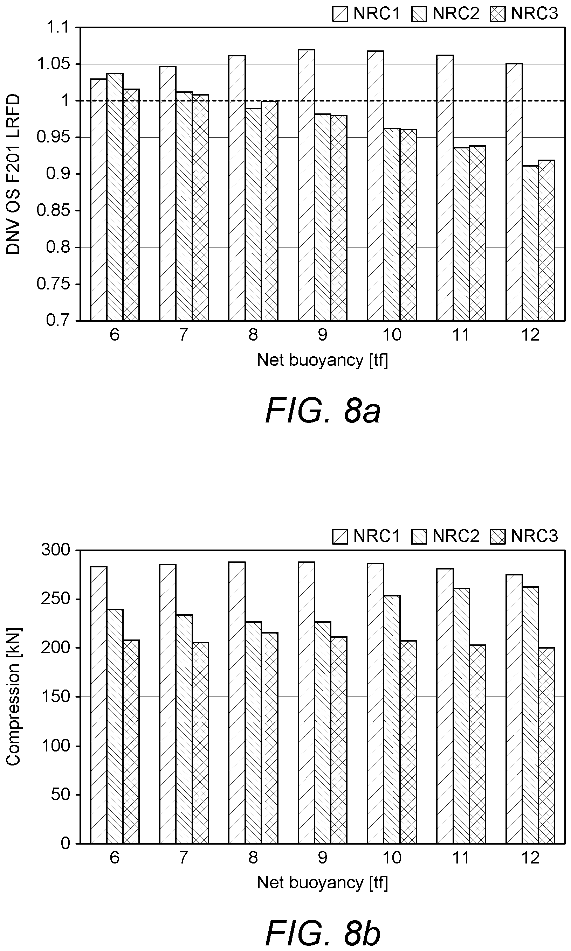

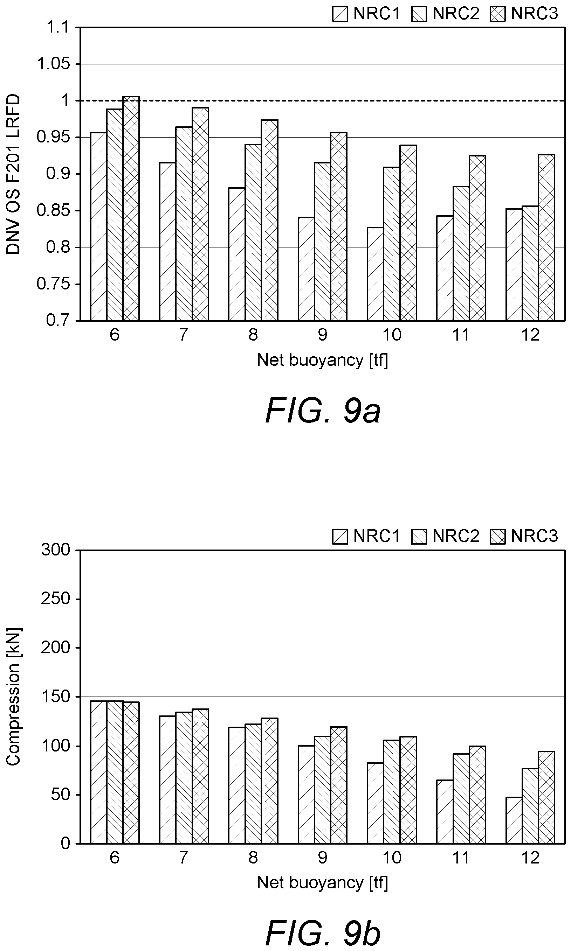

Figures 8a, 8b, 9a and 9b illustrate the dynamic response of risers 14 with one, two and three residual curvature loops 28 subject to a net positive buoyancy force of from six to twelve tonnes. In these examples, this upthrust is provided by buoyancy modules 34 disposed on the straighter upper portion 30 of the riser 14 above the loop 28 or series of loops 28. As in Figure 5, no buoyancy modules 34 are disposed between the loops 28 in these examples.

Figures 8a and 9a show LRFD values and Figures 8b and 9b show compressive forces. Figures 8a and 8b represent risers with a thermal insulation coating whereas Figures 9a and 9b represent risers that have a 3LPP coating. It will be noted that LRFD values fall with increasing buoyancy. Beneficially, as shown in Figure 8a, LRFD values are below 1 for risers 14 coated with thermal insulation and with two or three residual curvature loops 28 subject to buoyancy of eight tonnes or more. LRFD values are also below 1 for risers 14 with a 3LPP coating and one, two and three residual curvature loops 28, at least when subject to buoyancy of more than six tonnes. A reduction of compressive forces is also evident with increasing buoyancy, that reduction being especially marked in the case of risers 14 with a 3LPP coating as shown in Figure 9a.

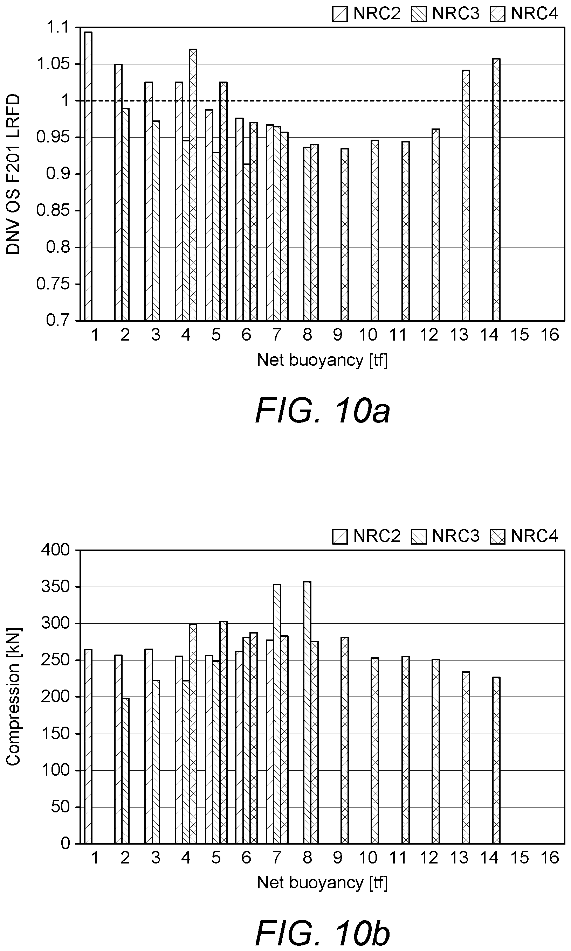

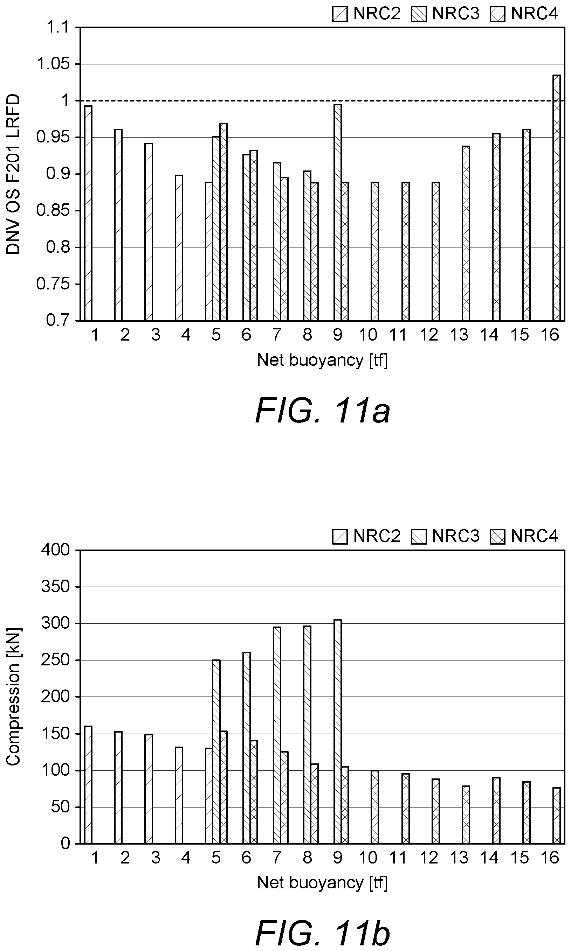

Figures 10a, 10b, 11a and 11b illustrate the dynamic performance of risers 14 with series of two, three and four residual curvature loops 28. In these examples, as in Figure 4, buoyant upthrust is provided by buoyancy modules 34 disposed between and above the loops 28 of each series. Figures 10a and 10b represent risers with a thermal insulation coating, subject to a net positive buoyancy force of from one to fourteen tonnes, whereas Figures 11a and 11b represent risers that have a 3LPP coating and are subject to a net positive buoyancy force of from one to sixteen tonnes.

Figures 10a and 11a show LRFD values and Figures 10b and 11b show compressive forces. Again, it will be noted that the LRFD values for most of the riser configurations and for most of the buoyancy provisions remain below 1, especially in the case of risers 14 with a 3LPP coating as shown in Figure 11a.

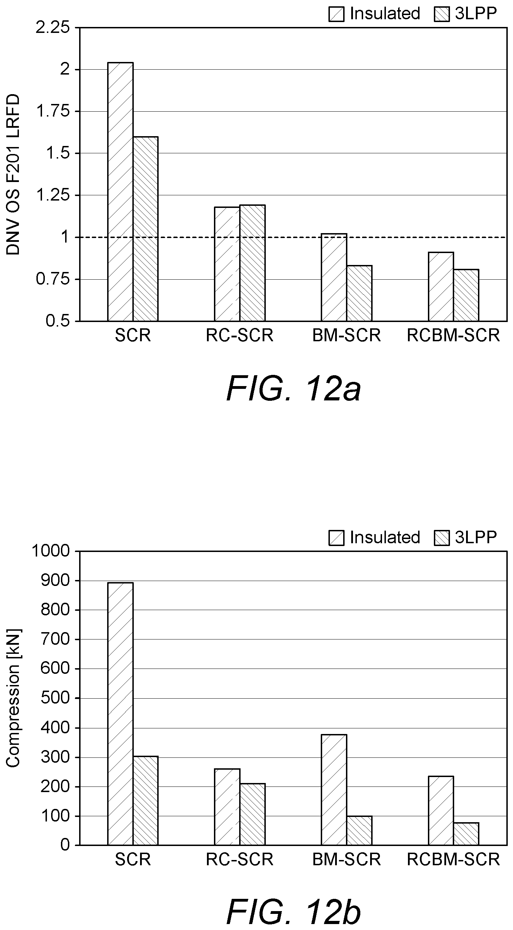

Finally, Figures 12a and 12b show, respectively, LRFD values and compressive forces for a conventional SCR, a riser 14 with a series of residual curvature loops 28 ('RC-SCR'), a riser 14 with buoyancy modules ('BM-SCR') and a riser 14 with a combination of buoyancy modules 34 and a series of residual curvature loops 28 ('RCBM-SCR').

In each case shown in Figures 12a and 12b, values are shown for riser 14 with a thermal insulation coating or with a 3LPP coating. In the case of thermal insulation coating with buoyancy modules 34, the riser 14 is subject to a net positive buoyancy force of six tonnes. In the case of 3LPP coating with buoyancy modules 34, the riser 14 is subject to a net positive buoyancy force of five tonnes. In the case of thermal insulation coating with residual curvature loops 28, the riser 14 has three such loops 28. In the case of 3LPP coating with residual curvature loops 28, the riser 14 has two such loops 28.

It will be noted from Figure 12a that the combination of buoyancy modules 34 and a series of residual curvature loops 28 ('RCBM-SCR') benefits from an LRFD value below 1 for risers 14 with a thermal insulation coating and for risers 14 with a 3LPP coating. Figure 12b also shows that compressive forces in the riser 14 are minimised by the combination of buoyancy modules 34 and residual curvature loops 28.

Other variations are possible within the inventive concept. For example, one or more ballast weights could be attached to the riser 14 at one or more residual curvature loops 28. One or more chains could also be attached to the riser 14 at one or more residual curvature loops 28. Such chains could be attached to and suspended from respective ballast weights or could instead be attached directly to the residual curvature loop 28 of the riser 14, hence serving as ballast weights themselves.

One or more ballast weights could be attached to a straighter lower portion 30 of the riser 14 at a location beneath the series of residual curvature loops 28. Similarly, the riser 14 could be moored at that location to a subsea foundation.

In some embodiments, a touch-down portion 40 of the riser 14 includes at least one section that is stiffer than other parts of the riser 14.

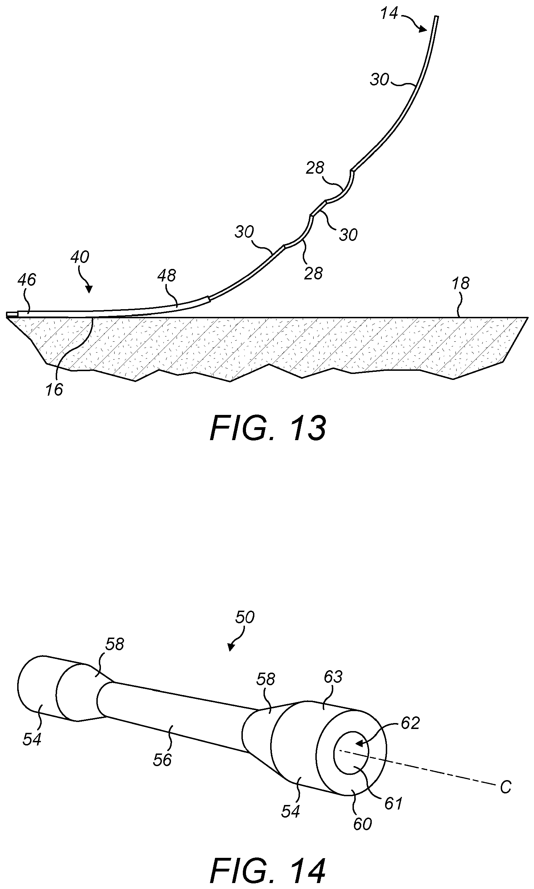

A riser 14 incorporating such a touch-down portion 40 is shown in Figure 13. The touch-down portion 40 extends across the TDP 16, such that a first portion 46 to one side of the TDP 16 rests on the seabed, and a second portion 48 to the other side of the TDP 16 extends to a point along the riser 14 that is suspended in the water column. In this example, the lengths of the first and second portions 46, 48 are substantially equal, but in others they may differ from one another. It should also be noted that the total length of the touch-down portion 40 may differ across embodiments.

The touch-down portion 40 may include at least one upset-end pipe 50, for example of the type described in WO 2008/111828. An example of an upset-end pipe 50 that may be incorporated in the touch-down portion 40 of Figure 13 is shown in isolation in Figure 14.

As will be understood by the skilled person, an upset-end pipe 50 is formed using forging to create thickened end portions 54 through heating and compression. The upset-end pipe 50 of Figure 14 includes thickened end portions 54 that join to a central body 56 via transition portions 58 that taper radially inwardly towards a longitudinal mid-point of the pipe 50. In this way, the outer diameter of each end portion 54 is greater than the outer diameterof the central body 56. Furthermore, the thickness of the wall 60 of each end portion 54 is greater than the thickness of the wall 60 of the central body 56.

The touch-down portion 40 may be formed by joining together a string of upset-end pipes 50 end-to-end, for example using welding. The outermost upset-end pipes 50 located at ends of the touch-down portion 40 may be joined to neighbouring riser pipe sections outside the touch-down portion 40 using welding or any other appropriate technique.

In a riser 14 such as that shown in Figure 13, the outer diameter of the central body 56 of each upset-end pipe 50 of the touch-down portion 40 is substantially equal to the outer diameter of neighbouring sections of the riser 14 outside the touch-down portion 40. As such, the outer diameter of the end portions 54 of each upset-end pipe 50 is greater than the outer diameter of neighbouring sections of the riser 14.

As discussed already, fatigue inducing motion may be transmitted along a riser 14 from a floating support towards and across the TDP 16. For example, wave-driven movement of a floating support may cause dynamic compression-wave pulses to travel downwardly along the riser 14, as well as resulting in periodic impact of the riser 14 against the seabed 18.

Steel catenary risers are known to experience high levels of fatigue in the region at and around the TDP 16 in particular, such that the portion of the riser 14 around the TDP 16 is more susceptible to fatigue-induced damage than other riser portions.

Furthermore, welds between neighbouring pipe sections of a riser 14 define zones of stress concentration that are more likely to experience failure through fatigue than other portions of the riser 14.

Through the use of upset-end pipes 50 in the touch-down portion 40, the joining welds between pipe sections that generally experience the highest level of fatigue along the riser 14 are made at thickened end portions 54. These thickened end portions 54 are stiffer than surrounding portions of the riser 14, and reduce stresses experienced by the welds in the touch-down portion 40. This reduces the risk of fatigue-induced damage in the touch-down portion 40, thus improving the fatigue resistance of the riser 14 as a whole.

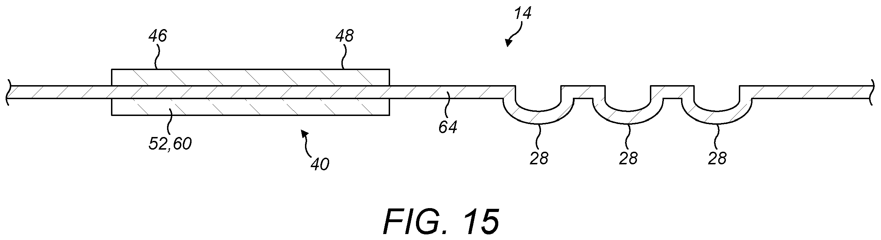

Turning now to Figure 15, in some embodiments the touch-down portion 40 is defined by a length of riser 14 having a thicker wall 60 than sections of the riser 14 outside the touch-down portion 40. This thicker section of wall 60 may be formed, for example, through applying layers or coatings of material 52 to the outer surface 64 of the riser 14, or through use of thicker-walled pipe sections in the touch-down portion 40.

In the example of Figure 15, material 52 is wrapped around the riser 14 to define a wrapped layer or sleeve. In other examples material may be deposited on the outer surface 64 of the riser 14 to form a coating. The thickness of the added material 52 is 10mm in the embodiment of Figure 15, although this thickness may vary. For example, the thickness of the added material layer 52 may be 20mm, 30mm, 40mm or 50mm.

When installed for use, the first portion 46 of the touch-down portion 40 that rests on the seabed to one side of the TDP 16 has a length of 200m in the example of Figure 15, and the second portion 48 that is suspended in the water column has a length of 50m. In other examples the overall length of the touch-down portion 40 may vary, as may the ratio of the lengths of the first and second portions 46, 48.

The thicker and stiffer wall 60 of the riser 14 across the touch-down portion 40 reduces fatigue-inducing stresses on the welds between riser pipe sections of the touch-down portion 40 in a similar manner to the thickened end portions 54 of the upset-end pipes 50 discussed above.

It will be appreciated that the stiffer wall 60 of the riser 14 along some or all of the touch-down portion 40 may be achieved in ways other than those described above. For example, a stiffer steel alloy may be used for pipe sections in the touch-down portion 40, or a stiffer material other than steel may be used. Furthermore, material processing such as heat treatment may be used to alter the mechanical properties, specifically the stiffness, of pipe sections incorporated in the touch-down portion 40.

In some embodiments, the riser 14 may include one or more pipes of titanium or titanium alloy, in particular along the touch-down portion 40 or a residual curvature loop 28. Titanium has a higher strength-to-weight ratio than steel, which allows for use of thicker titanium pipes without increasing the weight of the riser 14.

It will also be appreciated that although the touch-down portion 40 has been described with reference to the risers 14 of Figures 13 and 15, such a touch-down portion 40 could be applied to any riser 14 of the invention as defined by the appended claims that follow.

## Claims

1. A method of installing a steel catenary riser (14), the method comprising:
progressively unspooling and launching the riser (14) into water from a reel-lay vessel (10);
plastically deforming the riser (14) in a straightening process aboard the vessel (10) downstream of unspooling and upstream of launching the riser (14); and
adjusting the straightening process to form a series of two or more residual curvature loops (28) of locally increased curvature in a length of the riser (14) that will be suspended in the water above a touch-down point (16) in use, successive loops (28) of the series being separated and joined by a straighter portion (30) of the riser (14) of lesser curvature than those loops (28), **characterised in that** successive loops (28) of the series are downwardly convex in the installed riser (14).

2. The method of Claim 1, comprising also using the straightening process to form upper and lower straighter portions (30) of the riser (14) respectively above and below the series of loops (28), those straighter portions (30) also being of lesser curvature than the loops (28) of the series.

3. The method of Claim 1 or Claim 2, wherein in the installed riser (14), the or each straighter portion (30) of the riser (14) substantially follows a catenary curve that extends to a touch-down point (16) of the riser (14).

4. The method of any preceding claim, comprising attaching one or more buoyancy elements (34) to the riser (14) above at least one of the loops (28) of the series.

5. The method of Claim 4, comprising attaching one or more buoyancy elements (34) to the riser (14) between successive loops (28) of the series.

6. The method of Claim 4 or Claim 5, comprising attaching one or more buoyancy elements (34) to the riser (14) above the series of loops (28).

7. The method of any of Claims 4 to 6, comprising attaching the or each buoyancy element (34) to a point on the riser (14) after that point undergoes the straightening process and before that point is launched into the water.

8. The method of any preceding claim, further comprising attaching one or more ballast weights to the riser (14).

9. The method of Claim 8, comprising attaching the or each ballast weight to at least one of the loops (28) of the series.

10. A steel catenary riser (14) comprising a series of pre-formed portions that are plastically formed to different extents in longitudinal succession along a length of the riser (14) suspended in water above a touch-down point (16), those portions comprising two or more residual curvature loops (28) of locally increased curvature, successive loops (28) of the series being separated and joined by a straighter portion (30) of the riser of lesser curvature than those loops (28), **characterised in that** successive loops (28) of the series are downwardly convex.

11. The riser (14) of Claim 10, further comprising upper and lower straighter portions (30) respectively above and below the series of loops (28), those straighter portions (30) also being of lesser curvature than the loops (28) of the series.

12. The riser (14) of Claim 10 or Claim 11, wherein the or each straighter portion (30) of the riser (14) substantially follows a catenary curve extending to a touch-down point (16) of the riser (14).

13. The riser (14) of any of Claims 10 to 12, comprising one or more buoyancy elements (34) attached to the riser (14) above at least one of the loops (28) of the series.

14. The riser (14) of any of Claims 10 to 13, comprising one or more buoyancy elements (34) attached to the riser (14) between successive loops (28) of the series.

15. The riser (14) of any of Claims 10 to 14, comprising one or more buoyancy elements (34) attached to the riser (14) above the series of loops (28).

16. The riser (14) of any of Claims 10 to 15, further comprising one or more ballast weights attached to the riser (14).

17. The riser (14) of Claim 16, wherein the or each ballast weight is attached to at least one of the loops (28) of the series.

18. The riser (14) of any of Claims 10 to 17, comprising a touch-down portion (40) that extends across the touch-down point (16), wherein the riser (14) is stiffer along at least part of the length of the touch-down portion (40) than outside the touch-down portion (40).

19. The riser (14) of Claim 18, wherein a wall (60) of the riser (14) is thicker along at least part of the length of the touch-down portion (40) than in sections of the riser (14) outside the touch-down portion (40).

20. The riser (14) of Claim 19, wherein the touch-down portion (40) comprises at least one upset-end pipe (50).

21. A subsea installation comprising at least one riser (14) of any of Claims 10 to 20.

## Patentansprüche

1. Verfahren zum Installieren einer Stahlseilsteigleitung (steel catenary riser, SCR) (14), wobei das Verfahren Folgendes umfasst:
schrittweises Abrollen und Ausbringen der Steigleitung (14) ins Wasser von einem Rollenverlege-Seefahrzeug (10) aus;
plastisches Verformen der Steigleitung (14) in einem Begradigungsvorgang an Bord des Seefahrzeugs (10) stromabwärts des Abrollens und stromaufwärts des Ausbringens der Steigleitung (14); und
Anpassen des Begradigungsvorgangs, um eine Reihe von zwei oder mehr Restkrümmungsschleifen (28) mit örtlich erhöhter Krümmung in einer Länge der Steigleitung (14) zu bilden, die im Gebrauch in dem Wasser oberhalb eines Aufsetzpunkts (16) aufgehängt sein wird, wobei aufeinanderfolgende Schleifen (28) der Reihe durch einen geraderen Abschnitt (30) der Steigleitung (14) mit geringerer Krümmung als jene Schleifen (28) getrennt und verbunden werden, **dadurch gekennzeichnet, dass** aufeinanderfolgende Schleifen (28) der Reihe in der installierten Steigleitung (14) nach unten konvex sind.

2. Verfahren nach Anspruch 1, umfassend auch das Nutzen des Begradigungsvorgangs, um obere und untere geradere Abschnitte (30) der Steigleitung (14) oberhalb bzw. unterhalb der Reihe von Schleifen (28) zu bilden, wobei diese geraderen Abschnitte (30) auch eine geringere Krümmung als die Schleifen (28) der Reihe aufweisen.

3. Verfahren nach Anspruch 1 oder Anspruch 2, wobei in der installierten Steigleitung (14) der oder jeder geradere Abschnitt (30) der Steigleitung (14) im Wesentlichen einer Kettenlinie folgt, die sich bis zu einem Aufsetzpunkt (16) der Steigleitung (14) erstreckt.

4. Verfahren nach einem der vorstehenden Ansprüche, umfassend das Anbringen eines oder mehrerer Auftriebselemente (34) an der Steigleitung (14) oberhalb mindestens einer der Schleifen (28) der Reihe.

5. Verfahren nach Anspruch 4, umfassend das Anbringen eines oder mehrerer Auftriebselemente (34) an der Steigleitung (14) zwischen aufeinanderfolgenden Schleifen (28) der Reihe.

6. Verfahren nach Anspruch 4 oder Anspruch 5, umfassend das Anbringen eines oder mehrerer Auftriebselemente (34) an der Steigleitung (14) oberhalb der Reihe von Schleifen (28).

7. Verfahren nach einem der Ansprüche 4 bis 6, umfassend das Anbringen des oder jedes Auftriebselements (34) an einer Stelle der Steigleitung (14), nachdem diese Stelle den Begradigungsvorgang durchlaufen hat und bevor diese Stelle in das Wasser ausgebracht wird.

8. Verfahren nach einem der vorstehenden Ansprüche, ferner umfassend das Anbringen eines oder mehrerer Ballastgewichte an der Steigleitung (14).

9. Verfahren nach Anspruch 8, umfassend das Anbringen des oder jedes Ballastgewichts an mindestens einer der Schleifen (28) der Reihe.

10. Stahlseilsteigleitung (14) umfassend eine Reihe von vorgeformten Abschnitten, die in Längsrichtung nacheinander entlang einer Länge der Steigleitung (14), die oberhalb eines Aufsetzpunktes (16) im Wasser aufgehängt ist, in unterschiedlichem Ausmaß plastisch geformt sind, wobei diese Abschnitte zwei oder mehr Restkrümmungsschleifen (28) mit örtlich erhöhter Krümmung umfassen, wobei aufeinanderfolgende Schleifen (28) der Reihe durch einen geraderen Abschnitt (30) der Steigleitung mit geringerer Krümmung als jene Schleifen (28) getrennt und verbunden sind, **dadurch gekennzeichnet, dass** aufeinanderfolgende Schleifen (28) der Reihe nach unten konvex sind.

11. Steigleitung (14) nach Anspruch 10, ferner umfassend obere und untere geradere Abschnitte (30) oberhalb bzw. unterhalb der Reihe von Schleifen (28), wobei diese geraderen Abschnitte (30) auch eine geringere Krümmung als die Schleifen (28) der Reihe aufweisen.

12. Steigleitung (14) nach Anspruch 10 oder Anspruch 11, wobei der oder jeder geradere Abschnitt (30) der Steigleitung (14) im Wesentlichen einer Kettenlinie folgt, die sich bis zu einem Aufsetzpunkt (16) der Steigleitung (14) erstreckt.

13. Steigleitung (14) nach einem der Ansprüche 10 bis 12, umfassend ein oder mehrere Auftriebselemente (34), die an der Steigleitung (14) oberhalb mindestens einer der Schleifen (28) der Reihe angebracht sind.

14. Steigleitung (14) nach einem der Ansprüche 10 bis 13, umfassend ein oder mehrere Auftriebselemente (34), die an der Steigleitung (14) zwischen aufeinanderfolgenden Schleifen (28) der Reihe angebracht sind.

15. Steigleitung (14) nach einem der Ansprüche 10 bis 14, umfassend ein oder mehrere Auftriebselemente (34), die an der Steigleitung (14) oberhalb der Reihe von Schleifen (28) angebracht sind.

16. Steigleitung (14) nach einem der Ansprüche 10 bis 15, ferner umfassend ein oder mehrere Ballastgewichte, die an der Steigleitung (14) angebracht sind.

17. Steigleitung (14) nach Anspruch 16, wobei das oder jedes Ballastgewicht an mindestens einer der Schleifen (28) der Reihe angebracht ist.

18. Steigleitung (14) nach einem der Ansprüche 10 bis 17, umfassend einen Aufsetzabschnitt (40), der sich über den Aufsetzpunkt (16) hinweg erstreckt, wobei die Steigleitung (14) entlang mindestens eines Teils der Länge des Aufsetzabschnitts (40) steifer ist als außerhalb des Aufsetzabschnitts (40).

19. Steigleitung (14) nach Anspruch 18, wobei eine Wand (60) der Steigleitung (14) entlang mindestens eines Teils der Länge des Aufsetzabschnitts (40) dicker ist als in Sektionen der Steigleitung (14) außerhalb des Aufsetzabschnitts (40).

20. Steigleitung (14) nach Anspruch 19, wobei der Aufsetzabschnitt (40) mindestens ein gestauchtes Endrohr (50) umfasst.

21. Unterwasseranlage mit mindestens einer Steigleitung (14) nach einem der Ansprüche 10 bis 20.

## Revendications

1. Procédé d'installation d'une colonne montante caténaire en acier (14), le procédé comprenant :
de manière progressive, dérouler la colonne montante (14) et la mettre à l'eau à partir d'un navire de pose par déroulage (10) ;
déformer plastiquement la colonne montante (14) par une opération de redressement à bord du navire (10) en aval du déroulage et en amont de la mise à l'eau de la colonne montante (14) ; et
régler l'opération de redressement de façon à former une série d'au moins deux boucles de courbure résiduelle (28) présentant une courbure localement accrue dans une longueur de la colonne montante (14) qui sera suspendue dans l'eau au-dessus d'un point de contact avec le fond (16) durant l'utilisation, des boucles (28) successives de la série étant séparées et raccordées par une partie plus droite (30) de la colonne montante (14) présentant une courbure moindre relativement à ces boucles (28), **caractérisé en ce que** des boucles (28) successives de la série sont convexes vers le bas dans la colonne montante (14) installée.

2. Procédé selon la revendication 1, comprenant l'utilisation, en outre, de l'opération de redressement pour former des parties plus droites supérieure et inférieure (30) de la colonne montante (14), respectivement au-dessus et en dessous de la série de boucles (28), ces parties plus droites (30) présentant également une courbure moindre relativement aux boucles (28) de la série.

3. Procédé selon la revendication 1 ou la revendication 2, dans lequel, dans la colonne montante (14) installée, la ou chaque partie plus droite (30) de la colonne montante (14) suit sensiblement une courbe caténaire qui s'étend jusqu'à un point de contact avec le fond (16) de la colonne montante (14).

4. Procédé selon l'une quelconque des revendications précédentes, comprenant la fixation d'un ou de plusieurs éléments de flottaison (34) à la colonne montante (14) au-dessus d'au moins une des boucles (28) de la série.

5. Procédé selon la revendication 4, comprenant la fixation d'un ou de plusieurs éléments de flottaison (34) à la colonne montante (14) entre des boucles (28) successives de la série.

6. Procédé selon la revendication 4 ou la revendication 5, comprenant la fixation d'un ou de plusieurs éléments de flottaison (34) à la colonne montante (14) au-dessus de la série de boucles (28).

7. Procédé selon l'une quelconque des revendications 4 à 6, comprenant la fixation de l'élément ou de chaque élément de flottaison (34) à un point sur la colonne montante (14) après la soumission de ce point à l'opération de redressement et avant la mise à l'eau de ce point.

8. Procédé selon l'une quelconque des revendications précédentes, comprenant, en outre, la fixation d'une ou de plusieurs masses de lestage à la colonne montante (14).

9. Procédé selon la revendication 8, comprenant la fixation de la ou de chaque masse de lestage à au moins une des boucles (28) de la série.

10. Colonne montante caténaire en acier (14) comprenant une série de parties préformées, mises en forme plastiquement dans différentes mesures en une succession longitudinale le long d'une longueur de la colonne montante (14) suspendue dans l'eau au-dessus d'un point de contact avec le fond (16), ces parties comprenant au moins deux boucles de courbure résiduelle (28) présentant une courbure localement accrue, des boucles (28) successives de la série étant séparées et raccordées par une partie plus droite (30) de la colonne montante présentant une courbure moindre relativement à ces boucles (28), **caractérisée en ce que** des boucles (28) successives de la série sont convexes vers le bas.

11. Colonne montante (14) selon la revendication 10, comprenant, en outre, des parties plus droites supérieure et inférieure (30), respectivement au-dessus et en dessous de la série de boucles (28), ces parties plus droites (30) présentant également une courbure moindre relativement aux boucles (28) de la série.

12. Colonne montante (14) selon la revendication 10 ou la revendication 11, dans laquelle la ou chaque partie plus droite (30) de la colonne montante (14) suit sensiblement une courbe caténaire s'étendant jusqu'à un point de contact avec le fond (16) de la colonne montante (14).

13. Colonne montante (14) selon l'une quelconque des revendications 10 à 12, comprenant un ou plusieurs éléments de flottaison (34) fixés à la colonne montante (14) au-dessus d'au moins une des boucles (28) de la série.

14. Colonne montante (14) selon l'une quelconque des revendications 10 à 13, comprenant un ou plusieurs éléments de flottaison (34) fixés à la colonne montante (14) entre des boucles (28) successives de la série.

15. Colonne montante (14) selon l'une quelconque des revendications 10 à 14, comprenant un ou plusieurs éléments de flottaison (34) fixés à la colonne montante (14) au-dessus de la série de boucles (28).

16. Colonne montante (14) selon l'une quelconque des revendications 10 à 15, comprenant, en outre, une ou plusieurs masses de lestage fixées à la colonne montante (14).

17. Colonne montante (14) selon la revendication 16, dans laquelle la ou chaque masse de lestage est fixée à au moins une des boucles (28) de la série.

18. Colonne montante (14) selon l'une quelconque des revendications 10 à 17, comprenant une partie de contact avec le fond (40) qui s'étend d'un côté à l'autre du point de contact avec le fond (16), la colonne montante (14) étant plus raide le long d'au moins une partie de la longueur de la partie de contact avec le fond (40) qu'en des endroits autres que la partie de contact avec le fond (40).

19. Colonne montante (14) selon la revendication 18, dans laquelle une paroi (60) de la colonne montante (14) est plus épaisse le long d'au moins une partie de la longueur de la partie de contact avec le fond (40) que dans des sections de la colonne montante (14) autres que la partie de contact avec le fond (40).

20. Colonne montante (14) selon la revendication 19, dans laquelle la partie de contact avec le fond (40) comprend au moins une conduite à extrémités refoulées (50).

21. Installation sous-marine comprenant au moins une colonne montante (14) selon l'une quelconque des revendications 10 à 20.
